# EUROPEAN PATENT APPLICATION

(11) **EP 2 098 655 A1**
(43) Date of publication of application: **09.09.2009**
(21) Application number: 08102237.8
(22) Date of filing: 04.03.2008
(51) Int. Cl.: E04B 9/00, F28D 20/02, E04B 5/29, E04D 13/16

(54) **Ceiling with corrugated steel sheet**

(71) Applicant: Corus Technology BV, 1970 CA Ijmuiden (NL)
(72) Inventor: The designation of the inventor has not yet been filed
(74) Representative: Kruit, Jan

(57) **Abstract**

The invention relates to a ceiling (1) of a building, wherein the ceiling comprises a corrugated steel sheet (2) having horizontal portions altemating with portions that are upwards open, wherein the steel sheet has been covered by an isolating layer (3) and wherein the steel sheet has at least partially been provided with openings for reducing the reverberation of noise in the building.
According to the invention the upwards open portions of the steel sheet have been at least partially filled with means (4) for storing and releasing energy.
The invention also relates to a corrugated steel sheet for such a ceiling.

## Description

The invention relates to a ceiling for a building, wherein the ceiling comprises a corrugated steel sheet having horizontal portions alternating with portions that are upwards open, wherein the steel plate has been covered by an isolating layer and wherein the steel plate has at least partially been provided with openings for reducing the reverberation of noise in the building.

Such ceilings are well known in the art and are provided to reduce the noise in the building by damping the reflection of noise against the ceiling. Due to the openings in the steel sheet, part of the noise is damped by the isolating layer. This type of ceiling is made to be self-supporting due to the corrugation of the steel sheet. The upwards open portions can for instance be substantially V-shaped or U-shaped. This type of ceilings is mostly used for commercial buildings, such as offices or buildings in which mechanical labour forms an essential part of the work performed, such as industrial halls. The ceiling can form the roof of the building, in which case the isolating layer is covered by a waterproof covering, or the ceiling can form the ceiling of a room under another room, in which case the ceiling is provided under the floor of that other room.

However, nowadays the energy requirements of buildings require that overall energy consumption both for cooling and for heating is minimized. Nowadays, modem building are well isolated, resulting in the situation that during daytime often too much heat energy is present in the building. Cooling thus is often more necessary than heating. Thus, as much heat in the building as possible should be used and should not be discharged into the environment. For instance, during daytime the air in the building can become too hot due to the entrance of sun energy, while at night and in the morning the air in the building is too cold.

The ceiling of a building plays an important role in this respect, while at the same time the ceiling has to be built at a price that is as cost-effective as possible. Several techniques have already been used or proposed, but none of these provides a ceiling that fulfils the present standards for environment protection and energy reduction in a satisfactory working environment.

It is an object of the invention to provide a ceiling for a building that contributes to a satisfactory working environment, while at the same time it is another object of the invention to provide a ceiling of a building that is as energy efficient as possible while being cost-effective at the same time.

According to the invention, these objects can be reached with a ceiling for a building, wherein the ceiling comprises a corrugated steel sheet having horizontal portions alternating with portions that are upwards open, wherein the steel sheet has been covered by an isolating layer and wherein the steel sheet has at least partially been provided with openings for reducing the reverberation of noise in the building, and wherein the upwards open portions of the steel sheet have been at least partially filled with means for storing and releasing energy.

With the ceiling according to the invention a heat/cold buffer is provided in the upwards open portions of the corrugated steel sheet due to the presence of the means for storing and releasing energy, which results in a more constant temperature in the building, with the consequence that less energy is needed to heat or cool the building. The means for storing and releasing energy can for instance be concrete, which is a simple and cost-effective material for storing and releasing heat energy, that can easily be provided in the upwards open portions of the steel sheet. At the same time part of the steel sheet is provided with openings, which measure reduces the reverberation of the ceiling significantly, since at the spots where the openings are present noise or sounds are muffled by the isolating layer on top of the steel sheet. Moreover, this isolating layer can also provide a thermal isolation for the ceiling.

According to a preferred embodiment the means for storing and releasing energy comprise phase change material. Phase change material can take up a lot of energy at a predetermined, small temperature interval when the temperature of the surrounding construction rises, and release this energy again when the temperature goes down.

Preferably the means for storing and releasing energy comprise concrete in which particles containing phase change material are present. It is possible to use only phase change material to fill the upwards open portions, but phase change material is a rather expensive product. Thus, it is preferred to mix an amount of phase change material in the form of particles with concrete and use this mixture to (partially) fill the upwards open portions of the steel sheet. It has been found that using in volume 5% of particles with phase change material already improved the heat storage capacity with 150% as compared with concrete without phase change material. This is a very effective use of the expensive phase change material because the phase change material is always present near the surface where heat is exchanged, due to the use of the corrugated steel sheet in which the upwards open portions have a relatively small cross section.

According to another preferred embodiment the means for storing and releasing energy comprise a tube in at least some of the upwards open portions, for cooling or heating the means for storing or releasing energy with water passing through the tube. The use of such tubes can be compared with the use of tubes in a concrete floor for underfloor heating, but since the mass of the means for storing and releasing energy is much smaller in each upwards open portion, the response to the mass is much faster than in a floor using underfloor heating.

Preferably the tubes in the upwards open portions are connected to each other and/or to a device for cooling or heating the water passing through the tubes. When the tubes are connected to each other, water that passes through tubes and takes up heat/cold in one part of the building can be transported through tubes in another part of the building where the temperature is too low/high and heat/cool that part of the building. For instance, the hot part of the building can be the south part of the building where the sun heats the building, and the cold part can be the north part of the building. In this situation the water circulates through the tubes in the ceiling, which are connected to each other. When the building is warm enough, the heated water from the tubes can be transported through a device for cooling the water by connecting the tubes to this device, for instance a cooler at the north side of the building. This device can preferably also heat the water when the rooms inside the building are too cold, or the tubes can be connected to a collector or heat pump, so as to heat the building by radiation from the ceiling through which the tubes run.

Due to the measures that the upwards open portions of the corrugated steel plate are filled with means for storing and releasing energy, such as concrete in which phase change material is present, and preferably that tubes with for water are present in such concrete, the temperature in the building gets far less hot or cold then in the situation that these measures according to the invention are not present. This means that less energy is needed to cool or heat the building, and that the devices to do so can have a smaller capacity, making such devices less expensive.

According to a preferred embodiment the steel sheet has a lower surface that is treated in such a way that the thermal conductivity from air to steel is optimal at a temperature between 10 and 30° C, preferably between 15 and 25° C, and the thermal radiation from the steel sheet is optimal between 10 and 30° C, preferably between 15 and 25° C. Thus when the temperature in the building is high the heat energy of the air is conducted into the steel plate, where the means for storing and releasing energy will take up the heat energy, while when the building is cold the steel sheet will radiate the heat energy into the building.

Preferably the isolating layer is a layer of mineral wool. Mineral wool is very suitable for isolating both thermally and reverberatingly, and it is also lightweight and easy to apply.

According to a second aspect of the invention has been provided a corrugated steel sheet for use in a ceiling as described above, having horizontal portions alternating with portions that are upwards open, wherein the horizontal portions have been provided with openings, and wherein preferably also the upper parts of the sides of the portions that are upwards open have been provided with openings, and in that the lower parts of the portions that are upwards open are closed. Such a corrugated steel sheet is suitable for use in the ceiling according to the first aspect of the invention.

Preferably the portions of the corrugated steel sheet that are upwards open have inclined sides. With such a form, the ceiling is better suited to radiate heat into the building.

According to a preferred embodiment the portions of the corrugated steel sheet that are upwards open are V-shaped with a flat bottom. This shape makes it possible to fill the upwards open portions with a sufficient amount of means for storing and releasing energy, while at the same time the shape is such that a minimum of steel is needed to form the corrugated steel sheet.

Preferably the portions of the steel sheet that are upwards open have a height between 75 and 250 mm, more preferable between 100 and 200 mm, and have an upwards opening width between 50 and 225 mm, more preferable between 75 and 200 mm, wherein the horizontal portions have an opening width between 75 and 200 mm, more preferable between 100 and 175 mm. Such a steel sheet is strong and rigid enough to be self-supporting, and provides enough space in the upwards open portions for the means for storing and releasing energy.

The invention will be elucidated referring to an exemplifying embodiment of a ceiling in the accompanying figure.

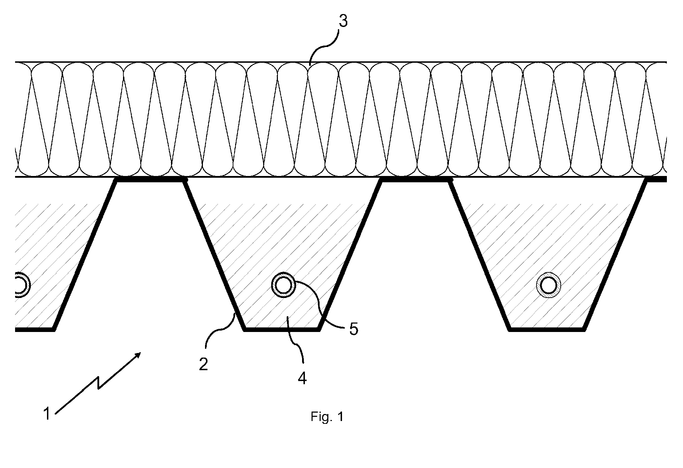

Figure 1 schematically shows an embodiment of a ceiling of a building according to the invention in cross section.

Figure 1 shows a ceiling 1 of a building made of a corrugated steel sheet 2 on which an isolating layer 3 is present. The corrugated steel sheet is formed of alternating horizontal portions and upwards open portions. The upwards open portions are partly filled with means for storing and releasing energy 4, for example concrete or concrete mixed with particle of phase change material. In this embodiment in each upwards open portion of the corrugated steel sheet filled with concrete mixed with phase change material, a tube 5 is placed approximately in the plane of symmetry of the upwards open portions, preferably in the lower half of the upwards open portion. In the horizontal portions of the corrugated steel sheet and preferably also in the upper part of the inclined sides of the upwards open portions of the corrugated steel sheet openings (not shown) are present.

The concrete mixed with phase change material can take up a lot of heat energy when the temperature in the building rises to a temperature above the temperature at which the phase change material changes from solid to liquid. The temperature range at which this happens can be chosen, and is for instance between 21 and 22° C. When the temperature in the building rises above 22° C, a lot of energy is taken up by the phase change material. When at a later phase the temperature in the building goes down again under 21° C, the phase change material will change its phase from liquid to solid again, and the energy that is released is used to heat the building by radiation from the corrugated sheet.

The tubes in the concrete mixed with phase change material can be used in several ways. When for instance the building has a south side and a north side, the south side will become hot very fast when the sun shines, whereas the north side can remain too cold. If the tubes are connected in such a way that water flowing through the tubes in the south side, which has been heated by the sun, thereafter flows through tubes in the north side of the building, the heated water will here heat the concrete with phase change material and thus the north side of the building by radiation.

However, when the building in total becomes too hot after the phase change material has taken up a lot of energy, the connection of the tubes is changed and the water is transported to a cooling device outside the building, for instance a cooler at the north side of the building. This cooling device can be of any type. Preferably this device can also be used as heater to heat the building when the building is too cold, by heating the water and circulating the heated water through the tubes in the ceiling. The water can also be heated by a separate device, for instance a heat pump.

The tubes are preferably made from a plastic material.

The isolating layer can be formed by any isolating material, but in a preferred embodiment it is a mineral wool. This is especially advantageous since the isolating layer must not only be thermally isolating, but has to function as a sound isolating material as well. The horizontal portions and the upper part of the inclined sides of the upwards open portions of the corrugated steel sheet are provided with openings or perforations, such that a considerable reduction of the noise in the building is achieved, due to the dampening of the sound that enters through such openings and is muffled by the isolating layer, instead of being reflected by the steel surface.

According to a preferred embodiment the steel sheet has been coated with a coating on its lower side. Such a coating should not only prevent oxidation, but also provide the steel sheet with a surface that gives the surface an optimal conductivity and radiation at room temperature, preferably between 15 and 25° C.

As shown in Figure 1, the upwards open portions of the steel sheet have two inclined surfaces, connected by a horizontal side at the lower end thereof. The sides are preferably inclined so as to give a better downwards radiation. Moreover, in this way the corrugated steel sheet has a good stiffness and strength, so the steel sheet can be relatively thin to provide a self-supporting ceiling. The upwards open portions preferably have a height of approximately 160 mm with a width of the horizontal side of approximately 40 mm and an opening width of approximately 130 mm. The horizontal portions of the corrugated steel sheet are approximately 120 mm wide.

It will be understood that many variations are possible from the embodiment as shown in Figure 1 and described above. For instance, instead of concrete another material could be used, or another isolating layer could be used. Of course the corrugated steel sheet could have other dimensions.

## Claims

1. Ceiling for a building, wherein the ceiling comprises a corrugated steel sheet having horizontal portions alternating with portions that are upwards open, wherein the steel sheet has been covered by an isolating layer and wherein the steel sheet has at least partially been provided with openings for reducing the reverberation of noise in the building, **characterised in that** the upwards open portions of the steel sheet have been at least partially filled with means for storing and releasing energy.

2. Ceiling according to claim 1, wherein the means for storing and releasing energy comprise phase change material.

3. Ceiling according to claim 1 or 2, wherein the means for storing and releasing energy comprise concrete in which particles containing phase change material are present.

4. Ceiling according to claim 1, 2 or 3, wherein the means for storing and releasing energy comprise a tube in at least some of the upwards open portions, for cooling or heating the means for storing or releasing energy with water passing through the tube.

5. Ceiling according to claim 4, wherein the tubes in the upwards open portions are connected to each other and/or to a device for cooling or heating the water passing through the tubes.

6. Ceiling according to any one of the preceding claims, wherein the steel sheet has a lower surface that is treated in such a way that the thermal conductivity from air to steel is optimal at a temperature between 10 and 30° C, preferably between 15 and 25° C, and the thermal radiation from the steel sheet is optimal between 10 and 30° C, preferably between 15 and 25° C.

7. Ceiling according to any one of the preceding claims, wherein the isolating layer is a layer of mineral wool.

8. Corrugated steel sheet for use in a ceiling according to any one of the preceding claims, having horizontal portions alternating with portions that are upwards open, **characterised in that** the horizontal portions have been provided with openings, and **in that** preferably also the upper parts of the sides of the portions that are upwards open have been provided with openings, and **in that** the lower parts of the portions that are upwards open are closed.

9. Corrugated steel sheet according to claim 8, wherein the portions that are upwards open have inclined sides.

10. Corrugated steel sheet according to claim 8 or 9, wherein the portions that are upwards open are V-shaped with a flat bottom.

11. Corrugated steel sheet according to claim 8, 9 or 10, wherein the portions that are upwards open have a height between 75 and 250 mm, preferably between 100 and 200 mm, and have an upwards opening width between 50 and 225 mm, preferably between 75 and 200 mm, wherein the horizontal portions have an opening width between 75 and 200 mm, preferably between 100 and 175 mm.
